# EUROPÄISCHE PATENTANMELDUNG

(11) **EP 4 838 104 A1**
(43) Veröffentlichungstag der Anmeldung: **11.11.2026**
(21) Anmeldenummer: 26176264.5
(22) Anmeldetag: 04.05.2026
(51) Int. Cl.: F16B 2/14, B60Q 1/04, F16B 5/02

(54) **MONTAGESYSTEM ZUR BEFESTIGUNG EINES SCHEINWERFERS**

(30) Priorität: 07.05.2025 CZ 20250205
(71) Anmelder: Skoda Auto a.s., 29301 Mladá Boleslav (CZ)
(72) Erfinder: Svajda, Matej, 29404 Dolní Bousov (CZ)

(57) **Zusammenfassung**

Montagesystem zur Befestigung eines Scheinwerfers, umfassend eine Hülse (1) mit einer Durchgangsbohrung sowie eine Schraube (9). Die Hülse (1) umfasst eine Außenwand zur Befestigung der Hülse (1) am Scheinwerfer. Das Montagesystem umfasst ferner ein Spreizelement (3) mit einer Durchgangsbohrung für die Schraube (9) sowie ein Anpress-/Keilelement (2) mit einer Durchgangsbohrung für die Schraube (9). Das Spreizelement (3) sowie das Anpress-/Keilelement (2) sind in der Durchgangsbohrung der Hülse (1) angeordnet. Das Spreizelement (3) umfasst eine konische Ausnehmung zur Aufnahme des Anpress-/Keilelements (2). Das Spreizelement (3) umfasst wenigstens an einem Teil seiner Außenoberfläche eine Verrippung (6) zum Kontakt mit der Innenoberfläche der Hülse (1), und die Hülse (1) umfasst an ihrer Innenoberfläche eine zur Verrippung (6) des Spreizelements (3) komplementäre Verrippung (7). Die Schraube (9) ist durch die Durchgangsbohrung der Hülse (1), die Durchgangsbohrung für die Schraube (9) des Anpress-/Keilelements (2) und die Durchgangsbohrung für die Schraube (9) des Spreizelements (3) hindurchgeführt.

## Beschreibung

### Technisches Gebiet

Die Erfindung betrifft ein selbstjustierendes System zur präzisen Befestigung von Scheinwerfern an einer Karosserie.

### Stand der Technik

Im Stand der Technik sind Montagesysteme bekannt, mittels derer die Ausrichtung von Scheinwerfern relativ zu einer Karosserie eingestellt werden kann. Beispielsweise ist in dem Dokument EP2217469 A1 ein Montagesystem offenbart, das mehrere Bauteile umfasst, welche mittels einer Schraubverbindung miteinander verbunden sind; konkret umfasst das Montagesystem wenigstens eine Schraube und eine Gewindehülse. Mittels der Schraube ist der Scheinwerfer an der Karosserie befestigt, und durch Drehen der Gewindehülse wird die Position des Scheinwerfers relativ zur Karosserie (in axialer Richtung) eingestellt.

Ein Nachteil des Standes der Technik kann darin bestehen, dass zur korrekten Einstellung des Scheinwerfers relativ zur Karosserie sowohl mit der Schraube als auch mit der Gewindehülse gearbeitet werden muss, wobei zum Anziehen der Schraube ein anderes Werkzeug erforderlich ist als zum Anziehen der Gewindehülse. Es wäre daher wünschenswert, eine Lösung bereitzustellen, bei der bei der Montage und Einstellung des Scheinwerfers kein Wechsel zwischen unterschiedlichen Werkzeugen erforderlich ist, sondern lediglich ein einziges Werkzeug (beispielsweise ein Schraubendreher) verwendet wird, mit dem der Scheinwerfer an der Karosserie fixiert und zugleich die Position des Scheinwerfers relativ zur Karosserie eingestellt werden kann.

### Wesen der Erfindung

Die vorstehend genannten Nachteile der aus dem Stand der Technik bekannten Lösungen werden zumindest teilweise durch ein Montagesystem zur Befestigung eines Scheinwerfers beseitigt. Das Montagesystem umfasst eine Hülse mit einer Durchgangsbohrung und eine Schraube. Die Hülse umfasst eine Außenwand zur Befestigung der Hülse am Scheinwerfer. Das Montagesystem umfasst ferner ein Spreizelement mit einer Durchgangsbohrung für die Schraube sowie ein Anpress-/Keilelement mit einer Durchgangsbohrung für die Schraube. Das Spreizelement und das Anpress-/Keilelement sind in der Durchgangsbohrung der Hülse angeordnet. Das Spreizelement umfasst eine konische Ausnehmung zur Aufnahme des Anpress-/Keilelements. Das Spreizelement weist wenigstens an einem Teil seiner Außenoberfläche eine Verrippung zum Kontakt mit einer Innenoberfläche der Hülse auf. Die Hülse weist an ihrer Innenoberfläche eine zur Verrippung des Spreizelements komplementäre Verrippung auf. Die Schraube ist durch die Durchgangsbohrung der Hülse, die Durchgangsbohrung für die Schraube des Anpress-/Keilelements und die Durchgangsbohrung für die Schraube des Spreizelements geführt.

Die Hülse kann am Scheinwerfer lösbar befestigt sein. Die Hülse kann an der Außenwand für den Kontakt mit dem Scheinwerfer ein Gewinde zum Einschrauben der Hülse in den Scheinwerfer aufweisen.

Die Hülse weist vorzugsweise eine zylindrische Form mit einer Durchgangsbohrung auf. Eine die Durchgangsbohrung der Hülse begrenzende Innenwand der Hülse weist vorzugsweise die Form einer Zylinderfläche auf, wobei diese Innenwand eine Verrippung aufweist.

Das Spreizelement weist vorzugsweise die Form eines Zylinders mit einer Durchgangsbohrung für die Schraube auf. Der Durchmesser des Zylinders des Spreizelements ist vorzugsweise kleiner als der Durchmesser der Durchgangsbohrung der Hülse. Die Verrippung an der Außenwand des Spreizelements ist lediglich an einem Teil der Außenwand vorgesehen, beispielsweise an der Hälfte oder einem Drittel der Außenwand des Spreizelements usw. Vorzugsweise wird derjenige Teil des Spreizelements, der an der Außenwand die Verrippung aufweist, durch einen konischen Abschnitt des Anpress-/Keilelements aufgeweitet. Die obere bzw. untere Seite des Spreizelements (abhängig von der Anordnung des Montagesystems) weist eine konische Ausnehmung zum Einführen des konischen Abschnitts des Anpress-/Keilelements auf. Die konische Ausnehmung des Spreizelements geht vorzugsweise in die Durchgangsbohrung für die Schraube des Spreizelements über.

Wenigstens ein Teil des Anpress-/Keilelements ist vorzugsweise konisch ausgebildet, um das Spreizelement aufzuweiten. Das Anpress-/Keilelement kann die Form eines Rotationskegels mit einer Durchgangsbohrung für die Schraube aufweisen. Das Anpress-/Keilelement kann jedoch auch nur einen Abschnitt mit der Form eines Rotationskegels aufweisen, wobei der übrige Teil des Anpress-/Keilelements beispielsweise zylindrisch ausgebildet sein kann. Der Durchmesser des Anpress-/Keilelements an der breitesten Stelle ist vorzugsweise kleiner als der Durchmesser der Durchgangsbohrung der Hülse. Das Anpress-/Keilelement bzw. der konische Abschnitt des Anpress-/Keilelements kann wenigstens teilweise in die Durchgangsbohrung für die Schraube des Spreizelements eingeführt werden, wodurch das Spreizelement bzw. ein Teil des Spreizelements aufgeweitet werden kann. Der konische Abschnitt des Anpress-/Keilelements kann in der Durchgangsbohrung für die Schraube asymmetrisch relativ zur Hülse eingeführt sein.

Bei einem asymmetrischen Einführen (relativ zur Hülse) des Anpress-/Keilelements bzw. des konischen Abschnitts des Anpress-/Keilelements in das Spreizelement kann das Spreizelement relativ zur Hülse verkippt werden, wobei die Verrippung des Spreizelements in die Verrippung der Hülse auf unterschiedlichen Höhenlagen der Verrippung der Hülse eingreifen kann. Auf diese Weise können das Anpress-/Keilelement und das Spreizelement innerhalb der Hülse in einer asymmetrischen Orientierung relativ zur Hülse gesichert werden.

Die Schraube kann in die Karosserie eingeschraubt werden. Die Karosserie kann eine Mutter oder ein Innengewinde zum Einschrauben der Schraube aufweisen. Durch die Schraube kann das Montagesystem an der Karosserie befestigt gehalten werden.

Mittels der Schraube wird das Montagesystem angezogen und gelöst. Beim Anziehen der Schraube, die die Durchgangsbohrung der Hülse sowie die Durchgangsbohrungen für die Schraube des Anpress-/Keilelements und des Spreizelements durchsetzt, wird das Anpress-/Keilelement wenigstens teilweise in die konische Ausnehmung des Spreizelements eingeführt, wobei das Anpress-/Keilelement vorzugsweise wenigstens teilweise in denjenigen Abschnitt des Spreizelements eingeführt wird, der an der Außenoberfläche eine Verrippung aufweist, wodurch der Durchmesser des Spreizelements vergrößert wird und die Verrippung des Spreizelements in Kontakt mit der Verrippung an der Innenwand der Hülse gelangt. Die einzelnen Rippen des Spreizelements greifen zwischen die Rippen der Hülse ein, wodurch das Spreizelement gegenüber einer Bewegung relativ zur Hülse gesichert ist; das Montagesystem befindet sich somit im angezogenen Zustand. Das Anpress-/Keilelement ist im angezogenen Zustand vorzugsweise gegenüber der Hülse unbeweglich, da es durch die Anzugskraft der Schraube in der eingeführten Stellung im Spreizelement gehalten wird. Beim Lösen der Schraube wird die auf das Anpress-/Keilelement wirkende Kraft verringert, und das Anpress-/Keilelement wird aus dem Spreizelement herausgezogen, wobei die Rippen des Spreizelements den Kontakt mit den Rippen der Hülse verlieren; das Montagesystem kann somit in den gelösten Zustand überführt und neu eingestellt werden.

Der Schraubenkopf kann in Kontakt mit einer Oberwand des Anpress-/Keilelements stehen, das Anpress-/Keilelement kann in Kontakt mit dem Spreizelement stehen, und die Unterseite des Spreizelements kann in Kontakt mit einer Oberfläche der Karosserie stehen. Der Kontakt des Spreizelements mit der Oberfläche der Karosserie kann eine unerwünschte Bewegung des Spreizelements vor dem Anziehen der Schraube verhindern.

Der Schraubenkopf kann jedoch auch in Kontakt mit einer Oberwand des Spreizelements stehen, das Spreizelement kann in Kontakt mit dem Anpress-/Keilelement stehen, und die Unterseite des Anpress-/Keilelements kann in Kontakt mit einer Oberfläche der Karosserie stehen. Der Kontakt des Anpress-/Keilelements mit der Oberfläche der Karosserie kann eine unerwünschte Bewegung des Anpress-/Keilelements vor dem Anziehen der Schraube verhindern.

Das Spreizelement und das Anpress-/Keilelement können somit in der Durchgangsbohrung auf zwei der vorstehend beschriebenen Weisen angeordnet sein. Die Spreizbarkeit des Spreizelements kann durch dessen Werkstoff und/oder dessen Form bestimmt sein (wie nachstehend unter Verwendung eines Schlitzes beschrieben).

Die Rippen am Spreizelement und/oder an der Hülse verlaufen vorzugsweise umlaufend entlang des Umfangs dieser Bauteile, wobei jede Rippe einen konstanten Abstand zu einer Ebene aufweist, die senkrecht zur Schraubenachse steht. Jede Rippe kann über den gesamten Umfang verlaufen, d. h. eine geschlossene Schleife bilden, oder nur über einen Teil des Umfangs. Die oberen und unteren Flächen der Rippen stehen vorzugsweise ebenfalls senkrecht zur Schraubenachse. Über einen Teil ihrer Höhe können sich die Rippen jedoch in radialer Richtung relativ zur Schraubenachse verjüngen, um das Ineinandergreifen der Verrippungen zu erleichtern. Die Rippen können beispielsweise einen rechteckigen Querschnitt oder einen Querschnitt in Form eines unregelmäßigen Vielecks aufweisen.

Ein Vorteil des Montagesystems zur Befestigung eines Scheinwerfers kann darin bestehen, dass durch ein einfaches initiales Anziehen der Schraube (bei der Montage des Scheinwerfers an der Karosserie) die Orientierung der Schraube (aufgrund der Einführorientierung eines Abschnitts des Anpress-/Keilelements in die konische Ausnehmung des Spreizelements; das Anpress-/Keilelement muss daher nicht symmetrisch relativ zur Hülse in das Spreizelement eingeführt sein) so eingestellt werden kann, dass die Schraube für eine präzise Befestigung des Scheinwerfers an der Karosserie ohne Spalt zwischen dem Scheinwerfer und der Karosserie ausgerichtet ist. Zur Einstellung der Orientierung des Scheinwerfers relativ zur Karosserie ist es somit nicht erforderlich, das Montagesystem erneut zu lösen und die Orientierung des Scheinwerfers/der Schraube zu verändern. Für eine etwaige Nachjustierung genügt es, die Schraube zu lösen, den Scheinwerfer (beispielsweise von Hand oder mit einem Haltewerkzeug) in die gewünschte Orientierung relativ zur Karosserie zu bringen und die Schraube erneut anzuziehen, wodurch der Scheinwerfer in der gewünschten (eingestellten) Position relativ zur Karosserie gesichert ist. Durch das Eingreifen der Verrippung des Spreizelements in die Verrippung der Hülse und durch Anziehen der Schraube ist die eingestellte Orientierung des Scheinwerfers relativ zur Karosserie gegen eine unerwünschte Änderung dieser Orientierung gesichert.

Das Spreizelement weist vorzugsweise an einem Abschnitt des Spreizelements wenigstens einen Spreizschlitz auf. Der Spreizschlitz ist vorzugsweise in axialer Richtung der Bohrung für die Schraube ausgerichtet. Die Länge des Spreizschlitzes ist vorzugsweise kleiner oder gleich der Hälfte der Höhe des Spreizelements. Die Länge des Spreizschlitzes kann der Höhe desjenigen Abschnitts des Spreizelements entsprechen, der die Verrippung aufweist. Die Spreizschlitze erstrecken sich vorzugsweise durch die gesamte Wandstärke des Spreizelements, d. h. von der Außenoberfläche bis zur Schraubenbohrung. Ein Teil der Länge des Spreizelements ist dadurch in mehrere Segmente unterteilt, die infolge der Schlitze in gewissem Maße elastisch sind. Die Spreizschlitze unterteilen vorzugsweise denjenigen Abschnitt des Spreizelements, der die konische Ausnehmung zum Einführen des Anpress-/Keilelements aufweist, in Segmente.

Die Spreizschlitze können das Aufweiten des Spreizelements beim Einführen des Anpress-/Keilelements in das Spreizelement erleichtern. Mittels der Spreizschlitze kann die Spannung im Spreizelement während des Aufweitens reduziert werden, wodurch die Gefahr einer Beschädigung des Spreizelements beim Aufweiten durch das Anpress-/Keilelement verringert werden kann.

Das Spreizelement weist vorzugsweise insgesamt vier Spreizschlitze auf. Die Spreizschlitze sind vorzugsweise gleichmäßig über den Umfang des Spreizelements verteilt.

Das Montagesystem umfasst vorzugsweise ferner eine Unterlegscheibe für die Schraube. Der Schraubenkopf kann mittels der Unterlegscheibe abgestützt sein, sodass der Schraubenkopf nicht in direktem Kontakt mit dem Anpress-/Keilelement oder dem Spreizelement steht. Mittels der Unterlegscheibe kann die vom Schraubenkopf eingeleitete Kraft gleichmäßig in das Spreizelement verteilt werden. Die Unterlegscheibe kann eine Verformung des Spreizelements oder des Anpress-/Keilelements verhindern, die durch das Einwirken der Kraft des Schraubenkopfs auf das jeweilige Bauteil bei einem unangemessen hohen Anzugsmoment verursacht wäre.

Die Unterlegscheibe kann in Kontakt mit dem Schraubenkopf und dem Spreizelement stehen.

Die Unterlegscheibe kann jedoch auch in Kontakt mit dem Schraubenkopf und dem Anpress-/Keilelement stehen.

Die Unterlegscheibe steht vorzugsweise mit demjenigen Bauteil des Montagesystems in Kontakt, das dem Schraubenkopf näher liegt; d. h. abhängig von der Anordnung des Spreizelements und des Anpress-/Keilelements in der Durchgangsbohrung der Hülse steht die Unterlegscheibe mit dem Anpress-/Keilelement oder mit dem Spreizelement in Kontakt.

Das Montagesystem umfasst vorzugsweise ferner ein Sicherungselement zur Sicherung des Spreizelements und des Anpress-/Keilelements innerhalb der Durchgangsbohrung der Hülse. Das Sicherungselement kann ein Herausfallen des Spreizelements und/oder des Anpress-/Keilelements aus der Durchgangsbohrung der Hülse verhindern, wobei das Sicherungselement vorzugsweise die Beweglichkeit des Anpress-/Keilelements und des Spreizelements innerhalb der Durchgangsbohrung der Hülse nicht beeinflusst. Das Sicherungselement kann beispielsweise am Eingang der Durchgangsbohrung der Hülse befestigt sein, und der Durchmesser der Durchgangsbohrung kann in diesem Bereich durch das Sicherungselement verringert sein. Der Durchmesser des derart verengten Eingangs der Durchgangsbohrung der Hülse kann kleiner sein als der Durchmesser des Spreizelements und/oder des Anpress-/Keilelements, wodurch ein Herausfallen des Anpress-/Keilelements und/oder des Spreizelements aus der Durchgangsbohrung der Hülse durch diesen Eingang verhindert werden kann.

Das Sicherungselement kann lösbar an der Hülse befestigt sein. Die Hülse kann am Eingang der Durchgangsbohrung ein Innengewinde aufweisen, und das Sicherungselement kann ein zu diesem Innengewinde komplementäres Gewinde aufweisen, wobei das Sicherungselement ringförmig ausgebildet sein kann. Das Sicherungselement kann somit an die Hülse angeschraubt werden.

Das Sicherungselement kann jedoch auch anders als lediglich mittels einer Schraubverbindung an der Hülse befestigt sein. Das Sicherungselement kann beispielsweise mittels einer Schnappverbindung o. dgl. an der Hülse befestigt sein.

Vorzugsweise ist die Hülse gegen ein Herausfallen des Spreizelements und des Anpress-/Keilelements, gegebenenfalls auch der Unterlegscheibe, an beiden Enden gesichert. Auf der dem Schraubenkopf zugewandten Seite kann ein Sicherungselement vorgesehen sein, das das Durchführen des Schraubenkopfs ermöglicht, jedoch nicht das Durchführen der übrigen Bauteile (also beispielsweise des Anpress-/Keilelements oder des Spreizelements usw.), und auf der gegenüberliegenden Seite kann ein Sicherungselement vorgesehen sein, das das Durchführen der Schraube sowie eines Abschnitts eines der Bauteile ermöglicht, der sich an der Karosserie abstützen soll. Dieses Bauteil (Anpress-/Keilelement oder Spreizelement, je nach deren Anordnung wie vorstehend beschrieben) weist vorzugsweise auf der der Karosserie zugewandten Seite eine Verjüngung auf, wobei diese Verjüngung das Sicherungselement passieren kann, der übrige Teil dieses Bauteils jedoch nicht. Die Verjüngung trägt dann eine Anlagefläche für den Kontakt mit der Karosserie. Eines der Sicherungselemente ist vorzugsweise lösbar, um die Montage des Systems zu erleichtern.

Die Anordnung gemäß der Erfindung ist somit in zwei Grundzustände einstellbar. Zwischen diesen Zuständen wird die Anordnung durch Anziehen bzw. Lösen der Schraube in ihrem Gegenstück umgeschaltet, wobei es sich dabei um eine Mutter oder um ein Innengewinde in der Karosserie oder einem anderen Teil des Fahrzeugs handeln kann. Im gelösten Zustand ist eine Relativverschiebung zwischen dem Spreizelement und der Hülse in axialer Richtung möglich. Dadurch kann die Höhe der Anordnung eingestellt werden und damit beispielsweise auch der Abstand des Scheinwerfers zur Karosserie oder zu einem anderen Bauteil, an dem der Scheinwerfer montiert ist. Im angezogenen Zustand greift die Verrippung des Spreizelements in die Verrippung der Hülse ein, wodurch eine Verschiebung zwischen diesen Bauteilen in axialer Richtung verhindert wird. Dadurch wird die Position des Scheinwerfers relativ zur Karosserie fixiert. Das Eingreifen der Verrippung wird durch das Aufweiten des Spreizelements bewirkt, welches durch das Anpress-/Keilelement und die konische Ausnehmung des Spreizelements gewährleistet ist - das Anpress-/Keilelement wird durch Anziehen der Schraube gegen das Spreizelement gedrückt, und dieses weitet sich auf.

Die Verrippung ist somit sowohl an der Hülse als auch am Spreizelement vorgesehen. Vorzugsweise sind an beiden Bauteilen mehrere Rippen hintereinander in axialer Richtung angeordnet. Allgemein kann jedoch an einem der Bauteile auch nur eine einzige Rippe vorgesehen sein. Eine höhere Anzahl von Rippen gewährleistet jedoch eine bessere Sicherung der Bauteile gegen Verschiebung, wobei die Anzahl der Rippen und deren Abstand zudem den maximalen Verschiebungsbereich bei der Einstellung des Systems beeinflussen.

### Erläuterung der Zeichnungen

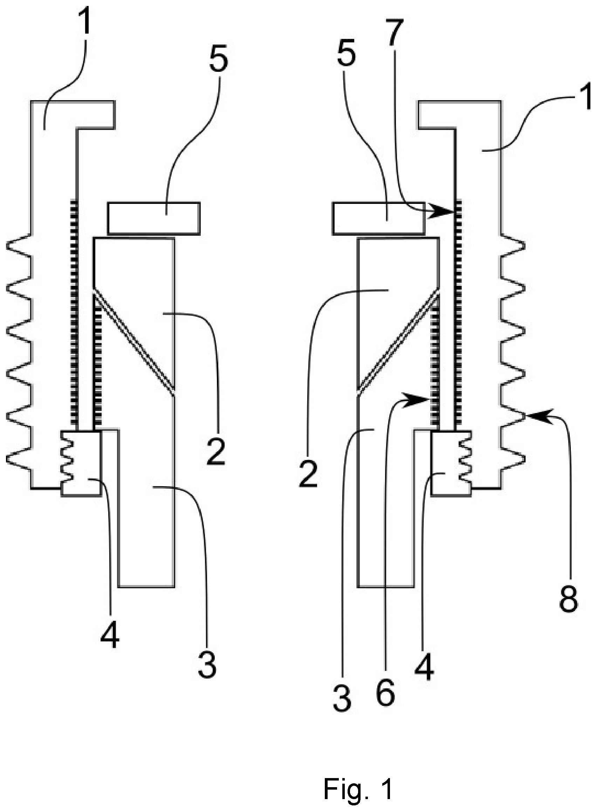

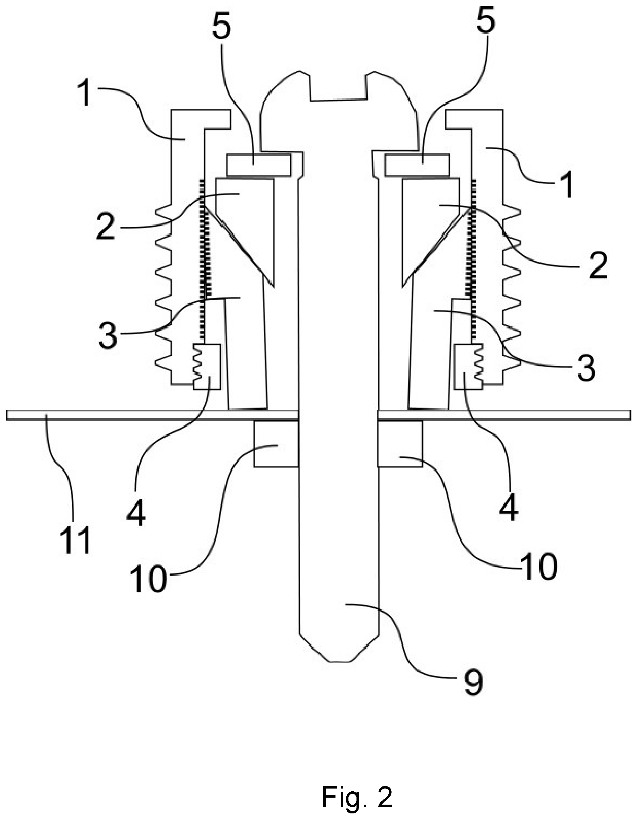

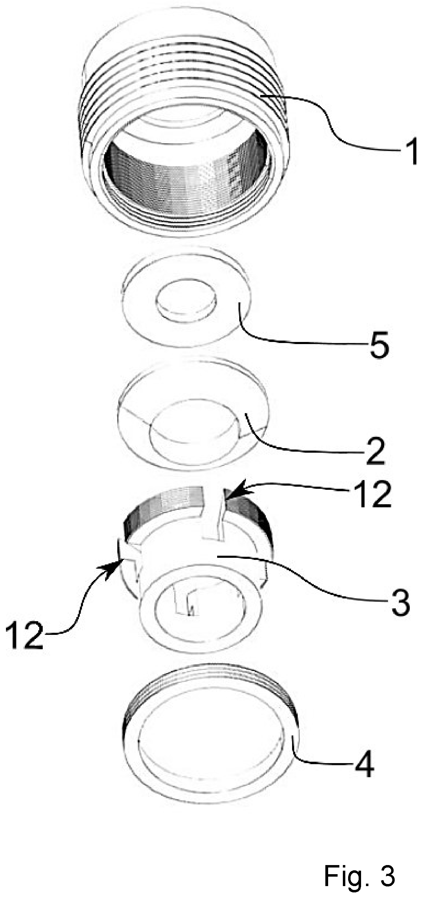

Das Wesen der Erfindung wird nachstehend anhand von Ausführungsbeispielen unter Bezugnahme auf die beigefügten Zeichnungen näher erläutert, wobei in:
obr. 1 Fig. 1 ist schematisch das Montagesystem im gelösten Zustand dargestellt,
obr. 2 Fig. 2 ist schematisch das Montagesystem im angezogenen Zustand dargestellt,
obr. 3 Fig. 3 ist schematisch das Montagesystem in zerlegter Darstellung gezeigt.

### Ausführungsbeispiele der Erfindung

Die Erfindung wird nachstehend anhand von Ausführungsbeispielen unter Bezugnahme auf die entsprechenden Zeichnungen näher erläutert.

### Erstes Ausführungsbeispiel

Im ersten Ausführungsbeispiel wird ein Montagesystem beschrieben. Das Montagesystem in diesem ersten Ausführungsbeispiel umfasst eine Hülse 1 mit einer Durchgangsbohrung, eine Schraube 9, ein Sicherungselement 4, eine Unterlegscheibe 5 für die Schraube 9, ein Spreizelement 3 sowie ein Anpress-/Keilelement 2. Das Montagesystem in zerlegter Darstellung ist in Fig. 3 angedeutet.

Das Anpress-/Keilelement 2 umfasst eine Durchgangsbohrung für die Schraube 9. Das Anpress-/Keilelement 2 weist in diesem Ausführungsbeispiel die Form eines Zylinders mit kegelförmigem Endabschnitt auf, wobei sich die Durchgangsbohrung für die Schraube 9 in Längsrichtung durch die Mitte des Anpress-/Keilelements 2 erstreckt.

Das Spreizelement 3 umfasst in diesem Ausführungsbeispiel eine Durchgangsbohrung für die Schraube 9. In diesem Ausführungsbeispiel weist die Oberseite des Spreizelements 3 eine konische Ausnehmung zum Einführen des Anpress-/Keilelements 2 bzw. des konischen Abschnitts des Anpress-/Keilelements 2 auf. Die konische Ausnehmung des Spreizelements 3 geht in diesem Ausführungsbeispiel in die Bohrung zum Einführen der Schraube 9 des Spreizelements 3 über. Das Spreizelement 3 weist in diesem Ausführungsbeispiel eine zylindrische Form auf, wobei sich die Durchgangsbohrung für die Schraube 9 zusammen mit der konischen Ausnehmung in Längsrichtung durch die Mitte des Spreizelements 3 erstreckt. Das Spreizelement 3 weist an dem oberen Drittel der Außenwand des Spreizelements 3 eine Verrippung 6 zum Kontakt mit einer Innenwand der Hülse 1 auf. Das Spreizelement 3 weist insgesamt vier Spreizschlitze 12 auf. Die Spreizschlitze 12 sind in diesem Ausführungsbeispiel gleichmäßig über den Umfang des Spreizelements 3 verteilt. Die Länge jedes Spreizschlitzes 12 beträgt in diesem Ausführungsbeispiel die Hälfte der Höhe des Spreizelements 3.

Der Durchmesser des Zylinders der oberen Hälfte des Spreizelements 3 ist größer als der Durchmesser des Zylinders der unteren Hälfte des Spreizelements 3. Die Unterseite der unteren Hälfte des Spreizelements 3 ist in diesem Ausführungsbeispiel für den Kontakt mit der Karosserie 11 des Fahrzeugs vorgesehen.

Die Hülse 1 umfasst eine runde Durchgangsbohrung. Der Durchmesser der Durchgangsbohrung der Hülse 1 ist größer als der Durchmesser des Anpress-/Keilelements 2 sowie der Durchmesser des Spreizelements 3. Die Außenwand der Hülse 1 weist in diesem Ausführungsbeispiel ein Gewinde 8 zur Befestigung am Scheinwerfer auf. An der Innenwand, welche die Durchgangsbohrung der Hülse 1 begrenzt, ist eine Verrippung 7 zum Kontakt mit der Verrippung 6 des Spreizelements 3 vorgesehen. Im Längsschnitt durch die Hülse 1 weist die Hülse 1 am ersten Eingang der Durchgangsbohrung eine Verengung auf, um ein Herausfallen des Anpress-/Keilelements 2 und des Spreizelements 3 aus der Durchgangsbohrung der Hülse 1 zu verhindern. Am zweiten Eingang bzw. am Ausgang der Durchgangsbohrung der Hülse 1 weist die Hülse 1 ein Innengewinde zum Anschrauben des Sicherungselements 4 auf.

Die Schraube 9 umfasst einen Schraubenkopf und einen Gewindeschaft. Der Schraubenkopf weist in diesem Ausführungsbeispiel einen Kreuzschlitz für einen Kreuzschlitzschraubendreher auf.

Die Unterlegscheibe 5 für die Schraube 9 ist in diesem Ausführungsbeispiel aus Metall. Die Unterlegscheibe 5 umfasst eine Öffnung zum Durchführen der Schraube 9. Die Unterlegscheibe 5 weist in diesem Ausführungsbeispiel die Form eines Zylinders mit einer Durchgangsöffnung zum Durchführen der Schraube 9 auf.

Das Sicherungselement 4 weist in diesem Ausführungsbeispiel die Form eines Rings auf. Eine äußere Seitenwand des Sicherungselements 4 weist ein Außengewinde zum Anschrauben an die Hülse 1 auf. Der Durchmesser der Öffnung des Sicherungselements 4 ist in diesem Ausführungsbeispiel größer als der Durchmesser der unteren Hälfte des Zylinders des Spreizelements 3, jedoch zugleich kleiner als der Durchmesser der oberen Hälfte des Zylinders des Spreizelements 3. Durch die Öffnung des Sicherungselements 4 kann somit die untere Hälfte des Zylinders des Spreizelements 3 hindurchtreten, nicht jedoch die obere Hälfte des Zylinders des Spreizelements 3.

Nachstehend wird die Anordnung der einzelnen Teile im Montagesystem beschrieben.

Innerhalb der Durchgangsbohrung sind die Unterlegscheibe 5, das Anpress-/Keilelement 2 und das Spreizelement 3 angeordnet. An die Hülse 1 ist am unteren Eingang der Durchgangsbohrung der Hülse 1 das Sicherungselement 4 angeschraubt. Die Schraube 9 ist durch die Durchgangsbohrung der Hülse 1, durch die Öffnung der Unterlegscheibe 5 zum Durchführen der Schraube 9, durch die Durchgangsbohrung für die Schraube 9 des Anpress-/Keilelements 2 sowie durch die Durchgangsbohrung des Spreizelements 3 geführt. Die Schraube 9 ist in eine Mutter 10 der Karosserie 11 des Fahrzeugs eingeschraubt. Die Hülse 1 ist mittels des Außengewindes in den Scheinwerfer eingeschraubt.

Das Montagesystem ist in zwei Zustände einstellbar, nämlich in einen gelösten Zustand und in einen angezogenen Zustand.

Das Montagesystem im gelösten Zustand ist in Fig. 1 dargestellt. In diesem gelösten Zustand ist die Schraube 9 gelöst oder überhaupt nicht eingeschraubt. Die Unterlegscheibe 5 steht in Kontakt mit dem Anpress-/Keilelement 2. Das Anpress-/Keilelement 2 steht in Kontakt mit dem Spreizelement 3, jedoch ist das Anpress-/Keilelement 2 lediglich 1 in die konische Ausnehmung des Spreizelements 3 eingeführt; das Anpress-/Keilelement 2 ist nicht einmal teilweise in die Durchgangsbohrung für die Schraube 9 des Spreizelements 3 eingeführt. Die obere Hälfte des Spreizelements 3 befindet sich innerhalb der Durchgangsbohrung der Hülse 1, wobei die untere Hälfte des Spreizelements 3 aus der Hülse 1 herausragt. Das Sicherungselement 4 ist an die Hülse 1 angeschraubt. Im gelösten Zustand steht die Verrippung 6 des Spreizelements 3 nicht in Kontakt mit der Verrippung 7 an der Innenwand der Hülse 1.

Das Montagesystem im angezogenen Zustand ist in Fig. 2 dargestellt. Die Schraube 9 ist in der Mutter 10 der Karosserie 11 eingeschraubt. Der Schraubenkopf 9 übt eine Kraft auf die Unterlegscheibe 5 aus, wobei diese Kraft durch die Unterlegscheibe 5 in das Anpress-/Keilelement 2 eingeleitet wird. Die Unterlegscheibe 5 steht somit in Kontakt mit dem Anpress-/Keilelement 2. Der konische Abschnitt des Anpress-/Keilelements 2 ist in die Durchgangsbohrung für die Schraube 9 des Spreizelements 3 eingeführt. Durch dieses Einführen wird das Spreizelement 33, die mit Spreizschlitzen 12 versehen ist. Die Verrippung 6 des Spreizelements 3 steht in Kontakt mit der Verrippung 7 an der Innenwand der Hülse 1, wobei die einzelnen Rippen der Verrippung 6 des Spreizelements 3 zwischen die Rippen der Verrippung 7 der Hülse 1 eingreifen. Die Unterseite der unteren Hälfte des Spreizelements 3 steht in Kontakt mit der Karosserie 11 des Fahrzeugs.

Zur Einstellung des Abstands zwischen der Karosserie 11 und der Hülse 1 genügt es, die Schraube 9 zu lösen. Es ist nicht erforderlich, die Anordnung zu demontieren, das Spreizelement 3 zu verdrehen oder die Schraube 9 vollständig zu entfernen.

### Alternative Ausführung

Nachstehend wird eine alternative Ausführung beschrieben; sofern nicht anders angegeben, entsprechen diejenigen Merkmale, die in der alternativen Ausführung nicht beschrieben sind, den Merkmalen des ersten Ausführungsbeispiels.

In der alternativen Ausführung weist das Anpress-/Keilelement 2 einen unteren Abschnitt zum Kontakt mit der Karosserie 11 des Fahrzeugs auf, und das Spreizelement 3 weist über seine gesamte Länge einen einheitlichen Durchmesser auf. Die Unterlegscheibe 5 für die Schraube 9 steht in Kontakt mit dem Spreizelement 3, und das Spreizelement 3 steht in Kontakt mit dem Anpress-/Keilelement 2. Der untere Abschnitt des Anpress-/Keilelements 2 ragt aus der Durchgangsbohrung der Hülse 1 heraus, wobei der Durchmesser der Öffnung des Sicherungselements 4 größer ist als der Durchmesser des unteren Abschnitts des Anpress-/Keilelements 2, jedoch zugleich kleiner ist als der Durchmesser des oberen Abschnitts des Anpress-/Keilelements 2.

### Bezugszeichenliste

1 - Hülse
2 - Anpress-/Keilelement
3 - Spreizelement
4 - Sicherungselement
5 - Unterlegscheibe
6 - Verrippung des Spreizelements
7 - Verrippung der Hülse
8 - Außengewinde
9 - Schraube
10 - Mutter
11 - Karosserie
12 - Spreizschlitz

## Patentansprüche

1. Montagesystem zum Befestigen eines Scheinwerfers, umfassend eine Hülse (1) mit einer Durchgangsbohrung und eine Schraube (9), wobei die Hülse (1) eine Außenwand zum Befestigen der Hülse (1) an dem Scheinwerfer umfasst, **dadurch gekennzeichnet, dass** das Montagesystem ferner ein Spreizelement (3) mit einer Durchgangsbohrung für die Schraube (9) und ein Anpress-/Keilelement (2) mit einer Durchgangsbohrung für die Schraube (9) umfasst, wobei sowohl das Spreizelement (3) als auch das Anpress-/Keilelement (2) in der Durchgangsbohrung der Hülse (1) angeordnet sind, wobei das Spreizelement (3) eine konische Ausnehmung zum Aufnehmen des Anpress-/Keilelements (2) umfasst, wobei das Spreizelement (3) wenigstens an einem Teil seiner Außenoberfläche eine Verrippung (6) zum Kontakt mit einer Innenoberfläche der Hülse (1) umfasst und die Hülse (1) an ihrer Innenoberfläche eine zu der Verrippung (6) des Spreizelements (3) komplementäre Verrippung (7) umfasst, wobei die Schraube (9) durch die Durchgangsbohrung der Hülse (1), durch die Durchgangsbohrung für die Schraube (9) des Anpress-/Keilelements (2) und durch die Durchgangsbohrung für die Schraube (9) des Spreizelements (3) hindurchgeführt ist.

2. Montagesystem zum Befestigen eines Scheinwerfers nach Anspruch 1, **dadurch gekennzeichnet, dass** das Spreizelement (3) an einem Teil des Spreizelements (3) wenigstens einen Spreizschlitz (12) umfasst.

3. Montagesystem zum Befestigen eines Scheinwerfers nach Anspruch 2, **dadurch gekennzeichnet, dass** das Spreizelement (3) insgesamt vier Spreizschlitze (12) umfasst.

4. Montagesystem zum Befestigen eines Scheinwerfers nach einem der Ansprüche 1 bis 3, **dadurch gekennzeichnet, dass** es ferner eine Unterlegscheibe (5) für die Schraube (9) umfasst.

5. Montagesystem zum Befestigen eines Scheinwerfers nach Anspruch 4, **dadurch gekennzeichnet, dass** die Unterlegscheibe (5) für die Schraube (9) mit dem Schraubenkopf der Schraube (9) und dem Spreizelement (3) in Kontakt ist.

6. Montagesystem zum Befestigen eines Scheinwerfers nach Anspruch 4, **dadurch gekennzeichnet, dass** die Unterlegscheibe (5) für die Schraube (9) mit dem Schraubenkopf der Schraube (9) und dem Anpress-/Keilelement (2) in Kontakt ist.

7. Montagesystem zum Befestigen eines Scheinwerfers nach einem der Ansprüche 1 bis 5, **dadurch gekennzeichnet, dass** es ferner ein Sicherungselement (4) zum Sichern des Spreizelements (3) und des Anpress-/Keilelements (2) innerhalb der Durchgangsbohrung der Hülse (1) umfasst.

8. Montagesystem zum Befestigen eines Scheinwerfers nach Anspruch 7, **dadurch gekennzeichnet, dass** das Sicherungselement (4) an der Hülse (1) abnehmbar befestigt ist.
